# EUROPÄISCHE PATENTANMELDUNG

(11) **EP 2 378 112 A1**
(43) Veröffentlichungstag der Anmeldung: **19.10.2011**
(21) Anmeldenummer: 10159916.5
(22) Anmeldetag: 14.04.2010
(51) Int. Cl.: F03B 7/00

(54) **Wasserrad**

(71) Anmelder: Hagleitner, Thomas, 6900 Bregenz (AT); Klocker, Bernhard, 6850 Dornbirn (AT)
(72) Erfinder: Hagleitner, Thomas, 6900 Bregenz (AT); Klocker, Bernhard, 6850 Dornbirn (AT)
(74) Vertreter: Künsch, Joachim

(57) **Zusammenfassung**

Wasserrad (1) zur Erzeugung von elektrischer oder mechanischer Energie mittels Wasserkraft, mit auf dem Umfang zwischen einem Radkranz (3) angeordneten Wasserspeichern, wobei das Wasserrad (1) nabenlos ausgebildet ist, und wobei sich das Wasserrad (1) mit seinem Gewicht auf zumindest zwei mit Lagerrollen (10, 11, 12, 13) versehene Lagerachsen (14, 15) stützt, die zusammen eine Lagereinheit (6, 7) bilden, die in ortsfesten Lagern gelagert ist.

## Beschreibung

Die Erfindung betrifft ein Wasserrad zur Erzeugung von elektrischer oder mechanischer Energie mittels Wasserkraft nach der im Oberbegriff des Patentanspruchs 1 genannten Art sowie eine Tragkonstruktion für ein Wasserrad nach Patentanspruch 13 und einen Wasserspeicher nach Patentanspruch 14.

Es sind Wasserräder unterschiedlicher Bauart bekannt. Es handelt sich in der Regel um Unikate oder um Wasserräder die aus mehreren baugleichen Segmenten zusammengefügt werden, wobei jedes Segment mindestens eine oder mehrere Wasserschaufeln als Wasserspeicher umfasst, die nicht lösbar mit den Seitenteilen verbunden sind. Alle bekannten Arten von Wasserrädern sind in der Drehachse einseitig (z.B. Turas-Wasserrad) oder zweiseitig gelagert. Zur Erzeugung elektrischer Energie wird ein Stromerzeuger als Energieumwandlungseinheit über eine Transmission und zahlreiche Übersetzungsstufen mit der Drehachse verbunden. Die bekannten Bauformen von Wasserrädern werden über Speichen oder Platten aus Holz, Metall oder Kunststoff mit einer oder mehreren Naben verbunden, die wiederum auf einer Welle oder direkt an einem Getriebe befestigt sind. Um das Gewicht des Wasserrades sowie des Wassers, das sich in den Wasserschaufeln befindet zu tragen, erfordern sowohl Speichen wie auch Nabe(n) eine entsprechend massive Konstruktion. Diese Konstruktion wird zusätzlich durch starke Biegemomente beansprucht wenn das Wasserrad nicht exakt im Schwerpunkt gelagert ist oder die Konstruktion zu Schwingungen angeregt wird, was sich wiederum negativ auf Lebensdauer und Wirkungsgrad der Konstruktion, insbesondere der Lager auswirkt.

Funktionsbedingt haben Wasserräder eine niedrige Drehzahl mit einem hohen Drehmoment. Hierdurch ist es üblich, zur Stromerzeugung ein mehrstufiges mechanisches Getriebe mit einem Wellenzapfen des Die DE 202009014655 U1 betrifft ein Wasserrad zur Erzeugung von elektrischer oder mechanischer Energie mittels Wasserkraft, mit auf dem Umfang in einem Radkranz angeordneten Wasserzellen, wobei der Radkranz über radiale Speichenstreben mit einer mittigen Drehachse für einen Antrieb insbesondere eines Generators drehfest verbunden ist.

Die DE 20206530 U1 offenbart ein Wasserrad, bestehend aus mindestens einem durch Speichen mit einer Drehachse verbundenen und mit Wasserschaufeln besetzten Radkranz, angetrieben durch strömend, schiessend oder frei fallend abfliessendes Wasser, zur Erzeugung von elektrischer Energie mittels eines mit der Drehachse verbundenen Stromerzeugers, wobei ein Radkranz aus mindestens 16 baugleichen, im Wechsel überlappend angeordneten, biegesteif ausgestalteten und miteinander verbundenen Radkranz-Segmenten besteht, deren beiden Seitenplatten mit mindestens einer Wasserschaufel aussteifend und kraftschlüssig verbunden sind.

Typischerweise übersteigt das Gewicht des Wasserrades mit Speichen, Naben und Welle das Gewicht des Wassers, das sich in den Wasserschaufeln befindet, um das Fünf- bis Zehnfache. Dieser Umstand erfordert eine sehr massive Ausführung der Lagereinheiten sowie der baulichen Anlagen und führt zu einem erhöhten Verschleiss. Die bekannten massiven und somit sehr schweren Bauformen von Wasserrädern erfordern somit eine sehr aufwendige und wartungsintensive Lagerung. Gleichzeitig müssen Fundamente und die tragende Unterkonstruktion auf ein sehr hohes Gewicht ausgelegt sein. Dementsprechend aufwendig und kostenintensiv ist die Errichtung dieser Konstruktionen. Insbesondere die erforderlichen Betonierarbeiten werden immer vor Ort ausgeführt und sind mit erheblichem Aufwand zur Errichtung von Schalungen und Armierung verbunden. Durch die erforderliche Aushärtezeit des Betons werden die Errichtungszeit und somit die Kosten für die Errichtung deutlich erhöht.

Es ist Aufgabe der vorliegenden Erfindung ein Wasserrad vorzuschlagen, das sich durch einen konstruktiv einfachen und leichten Aufbau auszeichnet und bei sehr hohem Vorfertigungsgrad unter Ausnutzung kostengünstiger Serienherstellung den Ansprüchen unterschiedlicher - wirtschaftlich nutzbarer - topographischer Gegebenheiten an beliebigen Orten Rechnung trägt.

Diese Aufgabe wird gelöst durch ein Wasserrad mit den Merkmalen des Anspruchs 1. Vorteilhafte Ausgestaltungen sind Gegenstand der Unteransprüche.

Gemäss der Erfindung ist das Wasserrad nabenlos ausgebildet, wobei sich das Wasserrad mit seinem Gewicht auf zumindest zwei mit Lagerrollen versehene Lagerachsen stützen kann, die zusammen eine Lagereinheit bilden, die in ortsfesten Lagern gelagert ist. Das Wasserrad braucht somit keine Welle und keine Speichen, es kann leichter und billiger gebaut, transportiert und montiert werden. Beispielsweise kann das Wasserrad als ober-, mittel- oder unterschlächtiges Wasserrad ausgebildet sein. Beispielsweise können insgesamt vier Lagerrollen vorgesehen sein, wobei vorteilhaft jeweils zwei Lagerrollen auf einer durchgehenden Lagerachse angeordnet sind. Es ist jedoch auch denkbar, jeder Lagerrolle eine separate Lagerachse zuzuordnen. Es können ferner mehr als vier Lagerrollen oder mehr als zwei Lagerachsen vorgesehen sein.

Eine Ausführungsform sieht vor, dass zumindest eine Lagereinheit bzw. Lagerrolle als Reibradeinheit ausgebildet sein kann, welche sich beispielsweise federbeaufschlagt unter Ausbildung einer reibschlüssigen Verbindung am Aussenumfang des Radkranzes anlegt, damit ein etwaiger Abrieb und somit ein Spiel der Lagerrolle automatisch ausgeglichen werden kann.

Eine weitere Ausführungsform sieht vor, dass zumindest eine Lagereinheit zur Übertragung der dem Wasser entzogenen potentiellen bzw. kinetischen Energie über entsprechende Übertragungsmittel mit einer Energieumwandlungseinheit, insbesondere einem Generator, verbunden sein kann. Es ist jedoch auch denkbar, jeder Lagerachse einen separaten Generator zuzuordnen. Beispielsweise könnte ein zweiter Generator last-und/oder drehzahlabhängig zugeschaltet werden, wenn ein bestimmter Grenzwert, beispielsweise die Spannung, eines ersten Generators überschritten wird. Beispielsweise kann die Lagerachse der Lagereinheit gleichzeitig die Antriebswelle für den Generator ausbilden. Bevorzugt ist zumindest die Lagereinheit zur Übertragung der dem Wasser entzogenen potentiellen bzw. kinetischen Energie als Reibradeinheit ausgebildet. Dabei ist sicherzustellen, dass die Geometrie und Materialauswahl der Lagerrollen die vollständige Übertragung der vom Wasserrad freigesetzten Energie durch Reibung ermöglicht.

Beispielsweise kann zwischen Lagereinheit und Energieumwandlungseinheit, z. B. ein Generator, zumindest eine Getriebe- und/oder Riemeneinheit angeordnet sein. Die Lagerrollen, die zur Lagerung sowie zur Übertragung der Energie auf den Generator dienen, haben einen wesentlich kleineren Durchmesser als das Wasserrad wodurch sich beispielsweise ein Übersetzungsverhältnis zwischen 1:25 und 1:50 ergeben kann. Dadurch kann je nach Bauart des eingesetzten Stromerzeugers das Übersetzungsverhältnis des Getriebes deutlich geringer gewählt werden oder das Getriebe ganz entfallen. Beispielsweise kann Anstelle eines Getriebes ein einfacher, kostengünstiger und wartungsarmer Riementrieb eingesetzt werden. Die höhere Drehzahl und das somit geringere Drehmoment haben zur Folge, dass alle Bauteile, die der Kraftübertragung dienen, deutlich kleiner dimensioniert werden können als bei konventioneller Bauweise, wodurch sich ein erhebliches Kosteneinsparungspotential ergibt.

Eine bevorzugte Ausführungsform sieht vor, dass die Lagerrolle und/oder der Aussenumfang des Radkranzes zumindest bereichsweise mit einer Profilierung, insbesondere einem Spurkranz versehen sein kann, um eine Führung des Radkranzes auf, an oder innerhalb der Lagerrolle zu gewährleisten. Beispielsweise kann die Lagerrolle mit einer rinnenartigen Vertiefung versehen sein, in der die dazu formkomplementär ausgebildete Mantelfläche des Radkranzes verläuft.

Insbesondere kann der aus dem Gewicht des Wasserrades und dem Gewicht des in den Wasserspeichern befindlichen Wassers resultierende Schwerpunkt innerhalb der Lagerachsen der Lagereinheiten bzw. des Wasserrades liegen. Je grösser dabei die Entfernung der Lagereinheiten von der lotrechten Achsebene des Wasserrades ist, desto grösser ist die Sicherheit dagegen, dass das Wasserrad infolge seines Drehmomentes eine Lagereinheit "überrollt", desto grösser ist der Druck an der Berührungsstelle und damit das übertragbare Drehmoment, und desto grösser ist die Lagerbelastung der Lagereinheiten. Bevorzugt werden daher die Lagereinheiten nicht weiter auseinandergesetzt als unbedingt nötig.

Beispielsweise kann der Radkranz aus zwei koaxial zueinander angeordneten Radkranzscheiben gebildet werden, wobei die beiden Radkranzscheiben von den zwischen den Radkranzscheiben angeordneten Wasserspeichern fixiert werden, und wobei jeder der beiden Radkranzscheiben auf zwei Lagerrollen läuft. Beispielsweise können die einzelnen Radkranzscheiben aus einem beliebigen Werkstoff wie beispielsweise Kunststoff, Metall, Verbundwerkstoffen oder Holz bestehen. Beispielsweise kann auf der Mantelfläche (Umgangsfläche) der Radkranzscheiben ein Eisenstreifen oder dergleichen als Laufstreifen angeordnet sein. Es ist ferner denkbar, die Radkranzscheiben aus einem T-Profil, beispielsweise einem Gussprofil, auszubilden, dessen Querflansch eine grosse Kontaktfläche zur Lagerrolle ausbilden kann.

Ferner ist denkbar, die einzelnen Radkranzscheiben aus mehreren lösbar oder unlösbar miteinander verbindbaren Teilsegmenten auszubilden. Die einzelnen Teile des Radkranzes werden in einer Weise ausgeführt, dass sie bevorzugt unter Anwendung lösbarer Verbindungsverfahren zusammengefügt werden können. Beispielsweise können vier Teilsegmente eine Radkranzscheibe ausbilden.

Beispielsweise können die Wasserspeicher als Wasserschaufeln, beispielsweise als gebogene oder gerade verlaufende in zumindest eine Richtung offene Wasserschaufeln, ausgebildet sein. Das Profil der Schaufeln kann je nach verfügbarer Wassermenge auf die erforderliche Länge zugeschnitten werden, wobei die Länge der Schaufeln die Breite des Wasserrades bestimmen. Die Schaufeln verbinden die beiden Radkranzscheiben und gewährleisten die notwendige Steifigkeit des Wasserrads. Der Durchmesser des Wasserrads bestimmt die Anzahl der erforderlichen Wasserschaufeln. Dabei ist die Geometrie der Wasserschaufeln vorteilhaft in einer Weise ausgeführt, dass diese unabhängig vom Wasserraddurchmesser und somit vom Winkel, in dem sie zueinander stehen, miteinander dichten oder zumindest den ungewollten Abfluss von Wasser zwischen den Schaufeln verhindern. Dazu werden die Schaufeln beispielsweise mit Nut und Kamm oder mit Dichtlippen versehen.

Beispielsweise können die Wasserspeicher auch als Wasserzellen, insbesondere als becher- oder trogartig ausgeführte Einzel- oder Mehrfachzelle, ausgebildet sein.

Beispielsweise können die Wasserspeicher mittels einer lösbaren Verbindung, beispielsweise über eine Schraub- oder Steckverbindung, zwischen den Radkranzscheiben befestigt werden. Dies ermöglicht eine einfache und kostengünstige Montage und gegebenenfalls Demontage des Wasserrades.

Ferner kann vorgesehen sein, die Wasserspeicher mittels einer unlösbaren Verbindung, beispielsweise über eine Schweiss- oder Nietverbindung, zwischen den Radkranzscheiben zu befestigen. Diese Ausführungsform bietet Vorteile hinsichtlich der erzielbaren Festigkeit bzw. Gesamtsteifheit des Wasserrades.

Der Radkranz kann in Abhängigkeit des geforderten Wasserraddurchmessers, wie zuvor bereits beschrieben, aus einem beliebigen Werkstoff wie beispielsweise Metall, Verbundwerkstoff, Kunststoff oder Holz gefertigt werden. Durch geeignete Methoden wird die Position der Wasserspeicher vom Radkranz vorgegeben. Dazu können die Radkranzscheiben beispielsweise mit einem geeigneten Lochbild (Ausnehmungen) versehen sein, wobei die Ausnehmungen dem Durchtritt von Schrauben, Nieten oder Stiften zur kraftschlüssigen, reibschlüssigen oder formschlüssigen Befestigung in korrespondierenden Aufnahmeöffnungen der Wasserspeicher dienen, wodurch die Position der Wasserspeicher eindeutig vorgegeben wird. Ferner können an den Radkranzscheiben befestigte Stifte beispielsweise ein Aufstecken der Wasserradschaufeln über dafür vorgesehene Öffnungen des Profils erlauben, und somit zusätzlich den Aufbau und die Positionierung erleichtern.

Die vorliegende Erfindung ermöglicht, dass ein Wasserrad ohne besondere Vorkenntnisse montiert werden kann. Das Wasserrad kann in Einzelteilen - insbesondere bestehend aus Wasserspeichern und Radkranzteilen - an den Bestimmungsort geliefert werden und ermöglicht somit einen unkomplizierten sowie günstigen Transport.

Die vorliegende Erfindung gewährleistet durch Einsparung beim Materialeinsatz und die weniger massive Ausführung der Elemente zur Lagerung und Kraftübertragung eine möglichst kostengünstige Errichtung bzw. Herstellung des Wasserrades. Zu diesem Zweck können als Wasserspeicher Wasserschaufeln oder Wasserzellen aus einem geeigneten Werkstoff wie beispielsweise Metall, Verbundwerkstoff oder Kunststoff eingesetzt werden, die beispielsweise unter Anwendung eines extrudierenden oder giessenden/druckgiessenden Verfahrens oder als Strang- oder Pressprofil hergestellt werden. Die Wasserschaufeln können auch durch Druck- oder Spritzguss hergestellt werden. Vorteilhaft sind die Wasserspeicher einteilig ausgebildet, was eine einfache Herstellung und Verwendung ermöglicht. Die nabenlose Ausführung des Wasserrades trägt ebenfalls wesentlich zur Gewichtsersparnis bei und führt zu einer deutlich geringeren Belastung der einzelnen Komponenten.

Die vorliegende Erfindung reduziert durch optimierte Lagerung und Gewicht des Wasserrads die Anforderungen an die baulichen Massnahmen soweit, dass standardisierte und in kostengünstiger Serienproduktion hergestellte Elemente eingesetzt werden können. So wird beispielsweise die erforderliche Höhe und somit der Materialeinsatz für die notwendigen Bauwerke durch die Lagerung am Umfang des Wasserrads deutlich reduziert. Ferner kann die Dimensionierung und somit der erforderliche Materialeinsatz durch die Verwendung eines Wasserrades in Leichtbauweise deutlich verringert werden.

Die Erfindung betrifft ferner eine Tragkonstruktion für ein zuvor beschriebenes Wasserrad, wobei die Tragkonstruktion als mobile Tragkonstruktion ausgebildet ist, die das Wasserrad zumindest bereichswiese umgibt und zumindest zwei Seitenteile ausbildet, wobei an den Seitenteilen die zum Betrieb des Wasserrades notwendigen Bauteile, wie Lagereinheiten und/oder Getriebe- und/oder Riemeneinheiten und/oder Energieumwandlungseinheiten und/oder Zulaufrinne befestigbar sind. Die Tragkonstruktion kann ferner weitere Wand- und Bodenteile umfassen und ein- oder mehrteilig ausgebildet sein. Beispielsweise kann die Tragkonstruktion aus Beton, Metall oder anderen geeigneten Werkstoffen gefertigt sein und in Fertigbauweise an den Errichtungsort des Wasserrads geliefert werden, wodurch die Errichtungszeit und der Aufwand für die baulichen Massnahmen zur Inbetriebnahme eines Wasserrades deutlich reduziert werden können.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung beschrieben ist. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben.

Es zeigen dabei:
- Fig.1: die schematische Schnittansicht durch ein erfindungsgemässes Wasserrad mit Tragkonstruktion;
- Fig. 2: das Wasserrad gem. Fig. 1 in einer präzisierten Frontansicht;
- Fig. 3: das Wasserrad gem. Fig. in Draufsicht;
- Fig. 4: eine Wasserschaufel in Einzeldarstellung;
- Fig. 5: eine aus Teilsegmenten gebildete Radkranzteilscheibe; und
- Fig. 6: innerhalb des Radkranzes befestigte Wasserschaufeln.

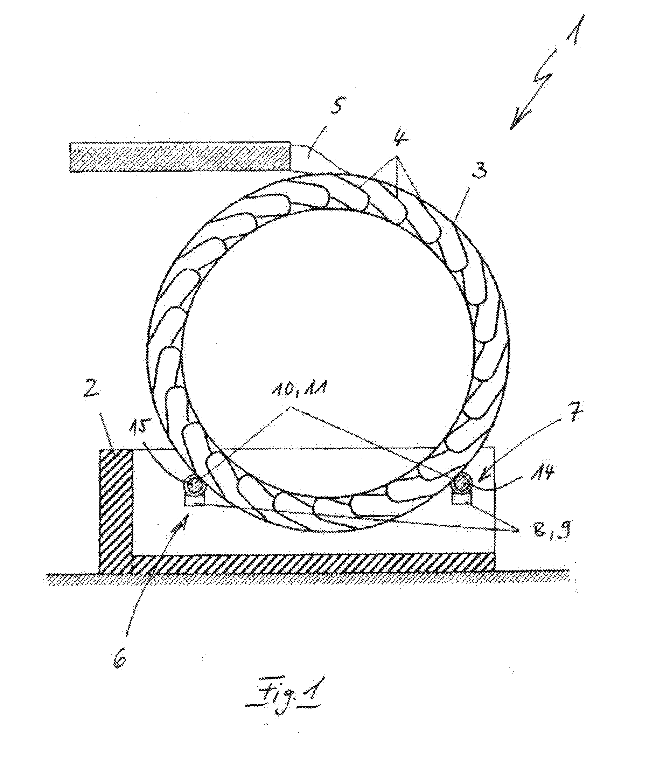

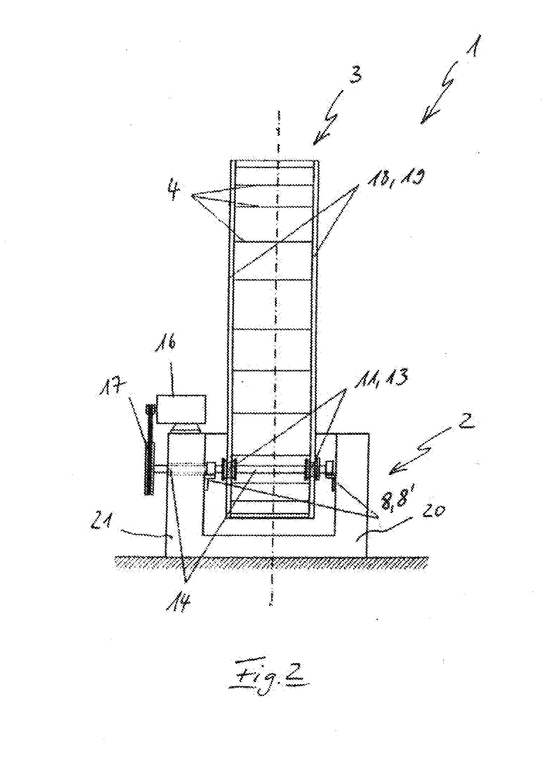

Das in den Figuren 1 bis 3 gezeigte nabenlose Wasserrad 1 ist in einer Tragkonstruktion 2 gelagert. Das Wasserrad 1 umfasst mehrere in einem Radkranz 3 angeordnete Wasserschaufeln 4 als Wasserspeicher. Die Wasserschaufeln 4 verteilen sich gleichmässig am Umfang des Radkranzes 3. Das Wasserrad 1 ist als oberschlächtiges Wasserrad ausgebildet und wird in seinem oberen Bereich von fliessendem Wasser 5 beaufschlagt. Weiter wird ersichtlich die Lagerung des Radkranzes 3 auf den Lagereinheiten 6 und 7. Die Lagereinheiten 6 und 7 sind über je zwei Lagerböcke 8, 8', 9, 9' an der Tragkonstruktion 2 befestigt. Die Lagereinheiten 6 und 7 umfassen insgesamt vier Lagerrollen 10, 11, 12, 13 (in Fig. 1 sichtbar dargestellt Lagerrollen 10, 11) sowie zwei Lagerachsen 14, 15. Jeder Lagerachse 14, 15 sind jeweils zwei der Lagerrollen 10, 11, 12, 13 zugeordnet. Durch eine geeignete Formgebung des Aussendurchmessers bzw. der Lauffläche des Radkranzes 3 und der Lagerrollen 10,11, 12, 13 wird eine optimale und verlustarme Führung des Wasserrades gewährleistet.

Das durch das Wasserrad 1 erzeugte Drehmoment treibt über die Lagerachse 14 einen elektrischen Stromerzeuger 16 als Energieumwandlungseinheit an. Der Antrieb erfolgt über einen Riementrieb 17. Das Material der Lagerrollen 11, 13 ist so gewählt, dass das erzeugte Drehmoment durch Reibung zwischen den Lagerrollen 11, 13 und dem Radkranz 3 vollumfänglich übertragen werden kann. Um eine einseitige Belastung zu vermeiden und die Laufruhe zu verbessern sind zwei gegenüberliegende Lagerrollen 10, 12 und 11, 13 auf einer Lagerachse 14 bzw. 15 angeordnet. Zumindest eine der Lagerrollen 10, 12 und 11, 13 bzw. der Lagerachsen 14 und 15 ist vorteilhaft federbeaufschlagt, womit ein Spiel zwischen den Teilen bzw. ein Verschleiss einfach ausgleichbar ist.

Der Radkranz 3 besteht aus zwei Radkranzscheiben 18, 19 zwischen denen die Wasserschaufeln 4 lösbar angeordnet sind. Die Radkranzteilscheibe 18 stützt sich in zwei Lagerrollen 10, 11 und die Radkranzteilscheibe 19 in den zwei Lagerrollen 12, 13 ab.

In der Tragkonstruktion 2 welche unter anderem zwei Seitenteile 20, 21 umfasst, sind die Lagerachsen 14, 15 ortsfest auf den Lagerböcken 8, 8', 9, 9' gelagert.

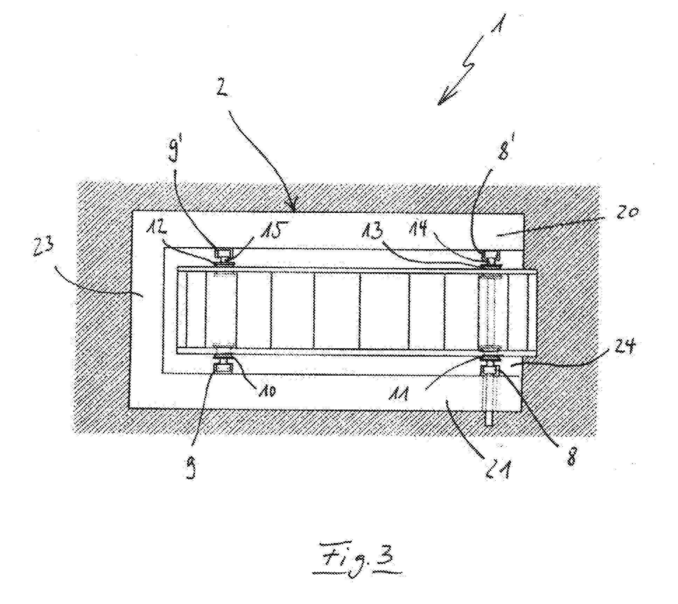

Fig. 3 ist das Wasserrad 1 ohne Stromerzeuger bzw. Riemeneinheit dargestellt. Hier sind gut die in den Lagerböcken 8, 8', 9, 9' gelagerten Lagerachsen 14, 15 sowie die Lagerrollen 10, 11, 12, 13 zu erkennen. Die Tragkonstruktion 2 umfasst neben den Seitenteilen 20, 21 eine Stirnwand 23 sowie eine Bodenplatte 24. Die Tragkonstruktion 2 ist als einstückiges Fertigbauteil ausgebildet.

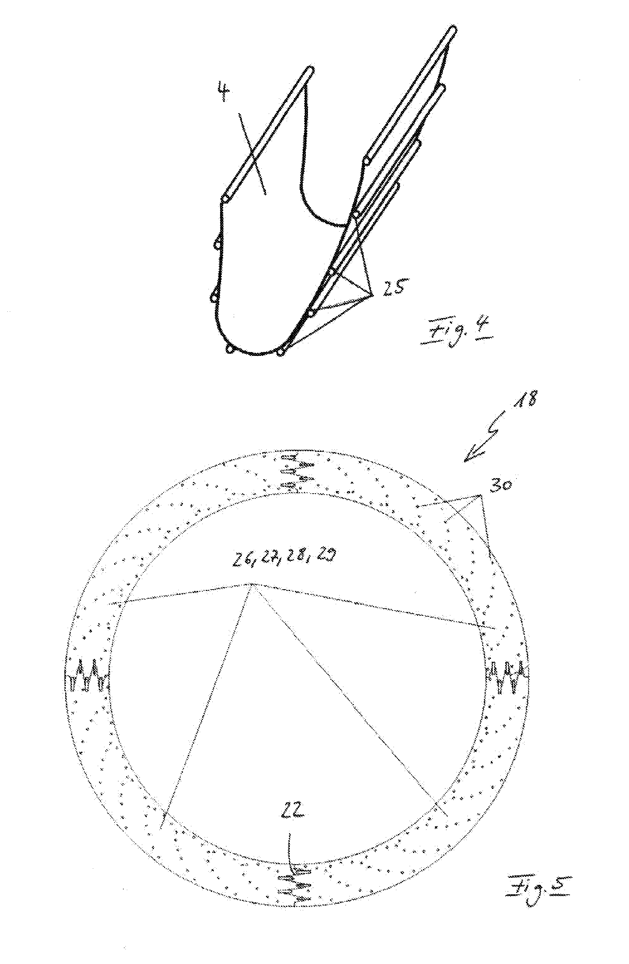

Fig. 4 zeigt eine Wasserschaufel 4 in Einzeldarstellung, wobei die Wasserschaufel 4 in einem geeigneten Material in einem geeigneten Herstellungsverfahren beispielsweise extrudierenden, giessenden/druckgiessenden Verfahren aus Metall oder Kunststoff hergestellt werden kann. An den Wasserschaufeln 4 befinden sich Schraub-/Steckkanäle 25 als Festlegemittel, die sowohl eine Befestigung wie auch Positionierung und Zentrierung der Wasserschaufeln 4 am Radkranz 3 ermöglichen. Der Durchmesser des Wasserrades 1 bestimmt die Anzahl der Wasserschaufeln 4, die um den Radkranz 3 angeordnet werden.

Fig. 5 zeigt eine Radkranzteilscheibe 18 in Einzeldarstellung, wobei die Radkranzteilscheibe 18 als Segmentscheibe ausgebildet ist. Als Material wird typischerweise Metall gegebenenfalls. auch Kunststoff oder Verbundwerkstoffen eingesetzt. Zum einfacheren Transport ist die Radkranzteilscheibe 18 aus mehreren Teilsegmenten 26, 27, 28, 29 aufgebaut. Durch geeignete geometrische Beschaffenheit, z. B. durch die Verzahnung 22, werden die einzelnen Teilsegmente 26, 27, 28, 29 miteinander verzahnt und verschraubt. Die Teilsegmente 26, 27, 28, 29 sind ferner mit den notwendigen Bohrungen 30 für den Zusammenbau des Radkranzes 3 bzw. zur Befestigung der Wasserschaufeln 4 versehen.

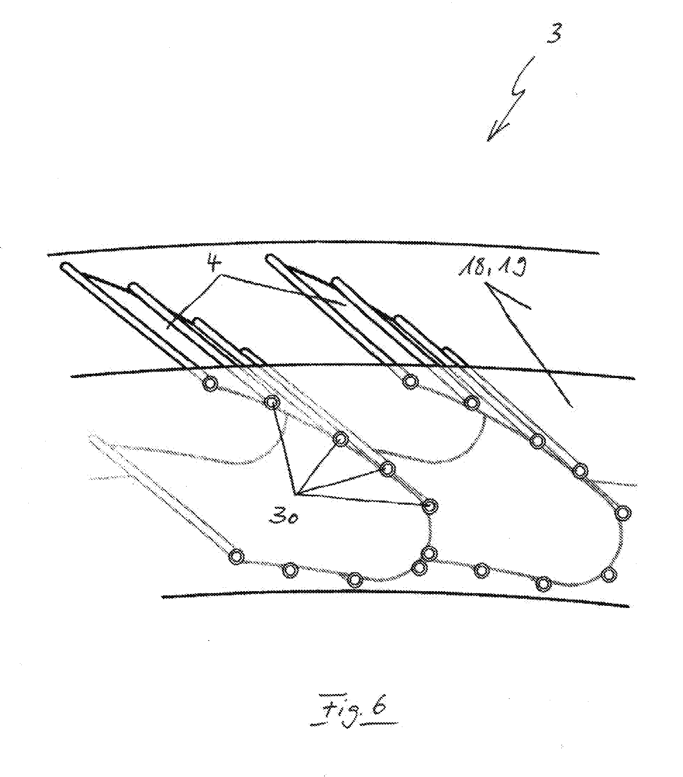

Fig. 6 zeigt in schematischer Darstellung innerhalb des Radkranzes 3 befestigte Wasserschaufeln 4. Zur eindeutigen Positionierung der Wasserschaufeln 4 am Radkranz 3 kann der Radkranz 3 werksseitig mit fest sitzenden Stiften versehen werden, die durch ein geeignetes Lochbild der Bohrungen 30 nur eine eindeutige Positionierung zulassen. Durch den Einsatz von Stiften kann zusätzlich der Zusammenbau von Radkranz 3 bzw. den Radkranzscheiben 18, 19 und Wasserschaufeln 4 erleichtert werden.

### Bezugszeichenliste

- 1: Wasserrad
- 2: Tragkonstruktion
- 3: Radkranz
- 4: Wasserschaufeln
- 5: Wasser
- 6: Lagereinheiten
- 7: Lagereinheiten
- 8, 8': Lagerböcke
- 9, 9': Lagerböcke
- 10: Lagerrolle
- 11: Lagerrolle
- 12: Lagerrolle
- 13: Lagerrolle
- 14: Lagerachse
- 15: Lagerachse
- 16: Stromerzeuger
- 17: Riementrieb
- 18: Radkranzteilscheibe
- 19: Radkranzteilscheibe
- 20: Seitenteil
- 21: Seitenteil
- 22: Verzahnung
- 23: Stirnwand
- 24: Bodenplatte
- 25: Schraub-/Steckkanäle
- 26: Teilsegment
- 27: Teilsegment
- 28: Teilsegment
- 29: Teilsegment
- 30: Bohrungen

## Patentansprüche

1. Wasserrad (1) zur Erzeugung von elektrischer oder mechanischer Energie mittels Wasserkraft, mit auf dem Umfang zwischen einem Radkranz (3) angeordneten Wasserspeichern, **dadurch gekennzeichnet, dass** das Wasserrad (1) nabenlos ausgebildet ist, wobei sich das Wasserrad (1) mit seinem Gewicht auf zumindest zwei mit Lagerrollen (10, 11, 12, 13) versehenen Lagerachsen (14, 15) stützt, die zusammen eine Lagereinheit (6, 7) bilden, die in ortsfesten Lagern gelagert ist.

2. Wasserrad nach Anspruch 1, **dadurch gekennzeichnet, dass** zumindest eine Lagereinheit (6, 7) als Reibradeinheit ausgebildet ist, welche sich vorteilhaft federbeaufschlagt unter Ausbildung einer reibschlüssigen Verbindung am Aussenumfang des Radkranzes (3) anlegt.

3. Wasserrad nach Anspruch 1 oder 2, **dadurch gekennzeichnet, dass** zumindest eine Lagereinheit (6, 7) zur Übertragung der dem Wasser entzogenen potentiellen bzw. kinetischen Energie über entsprechende Übertragungsmittel mit einer Energieumwandlungseinheit, insbesondere einem Generator (16), verbunden ist.

4. Wasserrad nach einem der Ansprüche 1 bis 3, **dadurch gekennzeichnet, dass** zwischen Lagereinheit (6, 7) und Energieumwandlungseinheit zumindest eine Getriebe- und/oder Riemeneinheit (17) angeordnet ist.

5. Wasserrad nach einem der Ansprüche 1 bis 4, **dadurch gekennzeichnet, dass** die Lagerrolle (10, 11, 12, 13) und/oder der Aussenumfang des Radkranzes (3) zumindest bereichsweise mit einer Profilierung, insbesondere einem Spurkranz versehen ist, um eine Führung des Radkranzes (3) auf, an oder innerhalb der Lagerrolle (10, 11, 12, 13) zu gewährleisten.

6. Wasserrad nach einem der Ansprüche 1 bis 5, **dadurch gekennzeichnet, dass** der aus dem Gewicht des Wasserrades (1) und dem Gewicht des in den Wasserspeichern befindlichen Wassers resultierende Schwerpunkt innerhalb der Lagerachsen (14, 15) der Lagereinheiten (6, 7) bzw. des Wasserrades (1) liegt.

7. Wasserrad nach einem der Ansprüche 1 bis 6, **dadurch gekennzeichnet, dass** der Radkranz (3) aus zwei koaxial zueinander angeordneten Radkranzscheiben (18, 19) gebildet wird, wobei die beiden Radkranzscheiben (18, 19) von den zwischen den Radkranzscheiben (18, 19) angeordneten Wasserspeichern fixiert werden, und wobei jeder der beiden Radkranzscheiben (18, 19) auf zwei Lagerrollen (10, 11, 12, 13) läuft, wobei jede Radkranzteilscheibe (18, 19) vorteilhaft aus mehreren lösbar oder unlösbar miteinander verbindbaren Teilsegmenten (26, 27, 28, 29) gebildet wird.

8. Wasserrad nach einem der Ansprüche 1 bis 7, **dadurch gekennzeichnet, dass** die Wasserspeicher als Wasserschaufeln (4), beispielsweise als gebogene oder gerade verlaufende in zumindest eine Richtung offene Wasserschaufeln (4), ausgebildet sind.

9. Wasserrad nach einem der Ansprüche 1 bis 7, **dadurch gekennzeichnet, dass** die Wasserspeicher als Wasserzellen, insbesondere als becher- oder trogartig ausgeführte Einzel- oder Mehrfachzelle, ausgebildet sind.

10. Wasserrad nach einem der Ansprüche 1 bis 9, **dadurch gekennzeichnet, dass** die Wasserspeicher mittels einer lösbaren Verbindung, beispielsweise über eine Schraub- oder Steckverbindung, zwischen den Radkranzscheiben (18, 19) befestigt sind.

11. Wasserrad nach einem der Ansprüche 1 bis 10, **dadurch gekennzeichnet, dass** in den Radkranzscheiben (18, 19) eine Vielzahl von Ausnehmungen (30), insbesondere lochartigen Ausnehmungen, vorgesehen sind, wobei die Ausnehmungen (30) dem Durchtritt von Schrauben, Nieten oder Stiften zur kraftschlüssigen, reibschlüssigen oder formschlüssigen Befestigung in korrespondierenden Aufnahmeöffnungen (25) der Wasserspeicher dienen.

12. Wasserrad nach einem der Ansprüche 1 bis 11, **dadurch gekennzeichnet, dass** die Wasserspeicher aus Kunststoff und/oder Metall, bevorzugt Leichtmetall und/oder Verbundwerkstoff bestehen und vorteilhaft einteilig als Strang-, Press-, Giess- oder Extrudierprofil ausgebildet sind.

13. Tragkonstruktion (2) für ein Wasserrad (1) nach zumindest einem der vorangegangenen Ansprüche, **dadurch gekennzeichnet, dass** die Tragkonstruktion (2) als mobile Tragkonstruktion ausgebildet ist, die das Wasserrad (1) zumindest bereichswiese umgibt und zumindest zwei Seitenteile (20, 21) ausbildet, wobei an den Seitenteilen (20, 21) die zum Betrieb des Wasserrades (1) notwendigen Bauteile, wie Lagereinheiten (6, 7) und/oder Getriebe- und/oder Riemeneinheiten (17) und/oder Energieumwandlungseinheiten (16) befestigbar sind.

14. Wasserspeicher eines Wasserrades nach Anspruch 1, **dadurch gekennzeichnet, dass** der Wasserspeicher aus Kunststoff und/oder Metall, bevorzugt Leichtmetall und/oder Verbundwerkstoff besteht und vorteilhaft einteilig als Strang-, Press-, Giess- oder Extrudierprofil ausgebildet ist.

15. Wasserspeicher nach Anspruch 14, **dadurch gekennzeichnet, dass** Festlegemittel zur lösbaren Festlegung des Wasserspeichers am Radkranz (3) des Wasserrades (1) vorgesehen sind.
